# EUROPEAN PATENT APPLICATION

(11) **EP 3 722 345 A1**
(43) Date of publication of application: **14.10.2020**
(21) Application number: 19168265.7
(22) Date of filing: 09.04.2019
(51) Int. Cl.: C08G 18/48, C08G 18/76, C08G 18/10, C08G 18/16, C08G 18/20, C08G 18/24, C08G 18/32, C08G 18/42

(54) **NON-PNEUMATIC TIRE AND PREPARATION PROCESS AND USE THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a polyurethane microcellular elastomer, a non-pneumatic tire and a preparation process and use thereof. The polyurethane microcellular elastomer of the present invention is obtained from a polyurethane reaction system comprising components such as isocyanate, trimethylolpropane-started polycaprolactone triol, a catalyst and a foaming agent. The non-pneumatic tire produced from the polyurethane microcellular elastomer of the present invention has very strong fatigue resistance and can be used for non-motor vehicles running at high speed.

## Description

### Technical field

The present invention relates to a polyurethane microcellular elastomer, a non-pneumatic tire and a preparation process and use thereof. The non-pneumatic tire is mainly applied to non-motor vehicles.

### Prior art

At present, two types of tires, i.e. pneumatic tires and non-pneumatic tires are usually used as tires in low-speed vehicles such as bicycles. Non-pneumatic tires are also known as filled tires or solid tires. Because the filled solid or semi-solid material is not compressed air, there is no problem of air inflation or leakage. The non-pneumatic tires can thus be substantially maintenance-free during their service life.

It has been tried in the industry to use polyurethane elastomers for preparing non-pneumatic tires. However, the problem of short service life due to insufficient fatigue resistance of polyurethane elastomers remains to be solved. In addition, many non-pneumatic tires require rubber outer tube, are complicated and costly to be produced.

CN101959699A discloses a polyurethane elastomer article, which is formed from a prepolymer mixture. The prepolymer mixture has a free diphenylmethane diisocyanate (MDI) content of 2.0 to 5.0% by weight, based on the weight of the prepolymer mixture. The prepolymer mixture comprises a polyester, a polyether, or a polycaprolactone (PCL) prepolymer and diphenylmethane diisocyanate (MDI). The polyurethane elastomer article is formed by curing the prepolymer mixture with a chain extender such as a curing agent comprising methylenedianiline-sodium chloride complex. The article has a good physical property. It weighs over 225 kg, and has a three-axis thickness greater than 10.2 cm.

CN102648223A discloses a polyurethane elastomer formed from a prepolymer derived from a copolyester polyol. The copolyester polyol has chain segments derived from one or more polyesters and caprolactone or polycaprolactone. The polyurethane elastomer has good hardness stability at temperatures ranging from 0 °C to 30 °C, and preferably has good hydrolytic stability.

CN105939870A discloses a polyurethane filled tire. The tire provided by the invention is produced from a cellular polyurethane elastic material having a molded density of 400 to 700 kg/m³, preferably 500 to 600 kg/m³ and a free rise density of 250 to 350 kg/m³, preferably 300 to 320 kg/m³ (according to ISO 845). The filler material used is an improved cellular polyurethane or polyurethane-urea elastic material.

The fatigue resistance and service life of tires are often seriously affected by the generated heat when a non-pneumatic tire is operated at a relatively high speed (for example 15 km/h). Therefore, a non-pneumatic tire with good fatigue resistance and long service life is still urgently needed in the industry.

### Summary of the invention

In one aspect of the present invention, a polyurethane microcellular elastomer is provided which is obtained from a reaction system comprising the following components:
a component A, one or more polyisocyanates;
a component B, including:
   B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
   B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B;
   B3) one or more catalysts; and
   B4) one or more foaming agents.

Preferably, the component A further comprises A2) at least one NCO-terminated isocyanate prepolymer having a NCO content of 15 to 25 wt% (as determined according to GBT 18446-2009).

Preferably, the B1) is present in a content of 0.5 to 5 wt%, preferably 1 to 3 wt%, more preferably 1.5 to 2.5 wt%, based on the total weight of the component B.

Preferably, the foaming agent is water, which is present in a content of 0.2 to 1 wt%, preferably 0.3 to 0.7 wt%, based on the total weight of the component B.

Preferably, the component B further comprises B5) at least one alcohol, alcohol amine or diamine-based chain extender having a low molecular weight, which is present in a content of 7 to 15 wt%, preferably 9 to 13 wt%, based on the total weight of the component B.

Preferably, the component B further comprises B6) at least one surfactant, which is present in a content of 0.2 to 1.0 wt%, preferably 0.2 to 0.6 wt. %, based on the total weight of the component B.

The polyurethane microcellular elastomer of the present invention has other satisfactory physical properties such as excellent tensile strength and tear strength while having excellent fatigue resistance.

Another aspect of the present invention is to provide a non-pneumatic tire. The non-pneumatic tire comprises a polyurethane microcellular elastomer obtained from a reaction system comprising the following components:
a component A, one or more polyisocyanates;
a component B, including:
   B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
   B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B;
   B3) one or more catalysts; and
   B4) one or more foaming agents.

Preferably, the B1) is present in a content of 0.5 to 5 wt%, preferably 1 to 3 wt%, more preferably 1.5 to 2.5 wt%, based on the total weight of the component B.

Preferably, the foaming agent is water, which is present in a content of 0.2 to 1 wt%, preferably 0.3 to 0.7 wt%, based on the total weight of the component B.

Preferably, the component B further comprises B5) at least one alcohol, alcohol amine or diamine-based chain extender having a low molecular weight, which is present in a content of 7 to 15 wt%, preferably 9 to 13 wt%, based on the total weight of the component B.

Preferably, the component B further comprises B6) at least one surfactant, which is present in a content of 0.2 to 1.0 wt%, preferably 0.2 to 0.6 wt. %, based on the total weight of the component B.

Still another aspect of the present invention is to provide a process for producing a non-pneumatic tire. The process comprises:
injecting a polyurethane reaction system into a mold, reacting, and then releasing the resultant from the mold after the completion of the reaction to obtain the non-pneumatic tire, wherein the polyurethane reaction system comprises the following components:
a component A, including isocyanates;
a component B, including:
   B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
   B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B;
   B3) one or more catalysts; and
   B4) one or more foaming agents.

Preferably, the B1) is present in a content of 0.5 to 5 wt%, preferably 1 to 3 wt%, more preferably 1.5 to 2.5 wt%, based on the total weight of the component B.

Preferably, the polyurethane reaction system is injected into the mold by centrifugal casting. The reaction is carried out under centrifugal condition.

Preferably, the foaming agent is water, which is present in a content of 0.2 to 1 wt%, preferably 0.3 to 0.7 wt%, based on the total weight of the component B.

Preferably, the component B further comprises B5) at least one alcohol, alcohol amine or diamine-based chain extender having a low molecular weight, which is present in a content of 7 to 15 wt%, preferably 9 to 13 wt%, based on the total weight of the component B.

Preferably, the component B further comprises B6) at least one surfactant, which is present in a content of 0.2 to 1.0 wt%, preferably 0.2 to 0.6 wt. %, based on the total weight of the component B.

Still another aspect of the present invention is to provide a new use. It is the use of the non-pneumatic tire of the present invention in non-motor vehicles having at least one wheel, which may reach a speed of <50 km/h, preferably 20 km/h to 50 km/h, more preferably 30 km/h to 50 km/h. Preferably, the at least one wheel refers to two wheels.

A further aspect of the present invention is to provide a non-motor vehicle comprising at least one non-pneumatic tire of the present invention as described above.

Preferably, the non-motor vehicle is a bicycle, more preferably an electric bicycle.

Preferably, said at least one non-pneumatic tire refers to two non-pneumatic tires.

Through repeated experiments, we have unexpectedly found that the polyurethane microcellular elastomer of the present invention using the trimethylolpropane-started polycaprolactone triol and corresponding components of the polyurethane reaction system has other satisfactory physical properties while having excellent fatigue resistance. The non-pneumatic tire prepared from the polyurethane microcellular elastomer of the present invention can pass a rigorous fatigue resistance test, and has a very long service life even when used for non-motor vehicles running at high speed (for example 40 km/h). Moreover, the non-pneumatic tire of the present invention is a polyurethane elastomer integrated tire, which eliminates the need for an outer tube, simplifies the process, improves production efficiency and saves cost.

### Description of drawings

Fig. 1 shows photographs of a tire prepared in Comparative Example 1 before the fatigue resistance test (as shown in the left photo (a tape is attached for distinguishing from that of the Example)) and after the test (as shown in the right photo);
Fig. 2 shows photographs of a tire prepared in Example 1 before the fatigue resistance test (as shown in the left photo) and after the test (as shown in the right photo).

The figures are used to further describe the disclosed specific embodiments and processes of the present invention. The accompanying figures and description thereof are intended to be illustrative but not restrictive.

### Embodiments

The present invention is further illustrated below with reference to specific embodiments. It is to be understood that the examples are not intended to limit the scope of the present invention but illustrate it. In addition, it should be understood that various modifications or changes may be made to the present invention by those skilled in the art according to the teaching of the present invention. Such equivalents also fall within the scope defined by the claims of the present application.

### Polyurethane microcellular elastomer

### Isocyanate

The polyisocyanates useful in the preparation of the present invention include aliphatic, cycloaliphatic and araliphatic polyisocyanates such as hexamethylene diisocyanate, isophorone diisocyanate, cyclohexane-1,4-diisocyanate, dicyclohexylmethane-4,4-diisocyanate and p-xylylene diisocyanate. Useful polyisocyanates also include isocyanate prepolymers/isocyanate-terminated prepolymers.

Preferable polyisocyanates are aromatic polyisocyanates such as phenylene diisocyanate, toluene diisocyanate, 1,5-naphthalene diisocyanate and polyisocyanates based on diphenylmethane diisocyanate (MDI), such as MDI isomers, i.e. 4,4-diphenylmethane diisocyanate, 2,4-diphenylmethane diisocyanate and mixtures thereof.

More preferably, the amount of 4,4-diphenylmethane diisocyanate used as the organic polyisocyanate is greater than 95 wt%, based on the total weight of the organic polyisocyanates. Most preferably, the amount of 4,4-diphenylmethane diisocyanate used as the organic polyisocyanate is greater than 97 wt%, based on the total weight of the organic polyisocyanates.

When a diisocyanate is the preferable polyisocyanate useful in the preparation of isocyanates, a mixture of the diisocyanate and a small proportion of higher-functional polyisocyanate can be used if desired. Other MDI variants are well known in the art and include a liquid product obtained by incorporating urethane, allophanate, urea, biuret, carbodiimide, uretonimine and/or isocyanurate residues.

The isocyanate-terminated prepolymer is prepared by reaction of an excess of polyisocyanate with a polyether polyol or polyester polyol to obtain a prepolymer having a specified NCO value. All processes for preparing prepolymers known to those skilled in the art can be used to prepare the isocyanate prepolymers useful in the present invention. The relative amount of the polyisocyanate and the polyether polyol depends on their equivalents and the desired NCO value and can be readily determined by those skilled in the art. If desired, the reaction can be carried out in the presence of a catalyst which enhances the formation of a urethane group, such as a tertiary amine and a tin compound. The reaction time may be 30 minutes to 4 hours, and the reaction temperature may be 50 to 90 °C.

Optionally, at least 90% of the groups obtained by the reaction of the polyisocyanate with the polyether polyol used to prepare the prepolymer are polyurethane groups. A polyisocyanate may be added to the prepolymer prepared in the above way, provided that the NCO value is kept within the specified range. The added amount is usually less than 25 wt%, based on the total weight of the isocyanates. The polyisocyanate added may be selected from the group consisting of those described as above. Aromatic polyisocyanates, especially MDI-based polyisocyanates, are preferable.

Preferably, the polyisocyanate is preferably a NCO-terminated isocyanate prepolymer having a NCO content of 15 to 25 wt% (as determined according to GBT 18446-2009), based on the total weight of the isocyanate prepolymer. In an embodiment of the present invention, the isocyanate prepolymer is obtained by reaction of 30 to 45 wt% of polytetramethylene ether glycol with 55 to 70 wt% of diphenylmethane diisocyanate (MDI) based on the total weight of the isocyanate prepolymer.

### Polyol

Polyols useful in the present invention include, but are not limited to, polyether polyols, polyester polyols, and/or polycarbonate polyols, and the like.

The polyether polyols used to prepare the isocyanate-terminated prepolymer include a product obtained by polymerization of ethylene oxide with other cyclic oxides such as propylene oxide or tetrahydrofuran in the presence of a polyfunctional initiator. A suitable initiator compound comprises a plurality of active hydrogen atoms and includes water and polyols such as ethylene glycol, propylene glycol, diethylene glycol, dipropylene glycol, cyclohexane dimethanol, resorcinol, bisphenol A, glycerol, trimethylolpropane, 1,2,6-hexanetriol or pentaerythritol. Mixtures of initiators and/or cyclic oxides can also be used.

Useful polyether polyols also include poly(oxyethylene-oxypropylene) diols and triols obtained by sequential addition of propylene oxide and ethylene oxide to a di- or trifunctional initiator, as fully described in the prior art. Mixtures of a diol and a triol can also be used.

The polyester polyol is obtained by reaction of a dicarboxylic acid or a dicarboxylic acid anhydride with a polyol. The dicarboxylic acid is preferably, but not limited to, an aliphatic carboxylic acid having 2 to 12 carbon atoms, such as succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, and mixtures thereof. The dibasic acid anhydride is preferably, but not limited to, phthalic anhydride, tetrachlorophthalic anhydride, maleic anhydride, and mixtures thereof. The polyol is preferably, but not limited to, ethylene glycol, diethylene glycol, 1,2-propanediol, 1,3-propanediol, dipropylene glycol, 1,3-methylpropanediol, 1,4-butanediol, 1,5-pentanediol, 1,6-hexanediol, neopentyl glycol, 1,10-nonanediol, glycerol, trimethylolpropane, and mixtures thereof. The polyester polyol further includes a polyester polyol prepared from a lactone. The polyester polyol prepared from a lactone is preferably, but not limited to, a caprolactone such as ε-caprolactone polyol.

The polyester polyol has preferably a functionality of 2 to 3 and a hydroxyl number of 20 to 180, more preferably a functionality of 2 and a hydroxyl number of 28 to 112.

The polycarbonate polyol is preferably, but not limited to, a polycarbonate diol. The polycarbonate diol can be prepared by reaction of a diol with a dihydrocarbyl or diaryl carbonate or phosgene. The diol is preferably, but not limited to, 1,2-propanediol, 1,3-propanediol, 1,4-butanediol, 1,5-pentanediol, 1,6-hexanediol, diethylene glycol , trioxymethylene diol or mixtures thereof. The dihydrocarbyl or diaryl carbonate is preferably, but not limited to, diphenyl carbonate.

In an embodiment of the present invention, the polyurethane microcellular elastomer reaction system of the present invention comprises the following components:
B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B.

The polycaprolactone triol (Polycaprolactone, PCL for short) can be obtained by ring-opening polymerization from ε-caprolactone (Caprolactone) in the presence of metal organic compounds (tetraphenyl tin) as a catalyst and dihydroxyl compounds (such as butylene glycol) or trihydroxyl compounds (such as trimethylolpropane) or tetrahydroxyl compounds (such as pentaerythritol) as a starter. It belongs to a polymeric polyester polyol. The polycaprolactone triol of the present invention is obtained by ring-opening polymerization in the presence of a catalyst and trimethylolpropane as a starter.

### Chain extender and/or crosslinker

The chain extender useful in the present invention is selected from the group consisting of a polyfunctional alcohol or amine compound containing a hydroxyl group or an amino group having a low molecular weight. A commonly used alcohol-based chain extender is selected from the group consisting of 1,4-butanediol (BDO), 1,6-hexanediol, glycerin, trimethylolpropane, diethylene glycol (DEG), triethylene glycol, neopentyl glycol (NPG), sorbitol, diethylaminoethanol (DEAE), and the like. An amine-based chain extender is selected from the group consisting of 3,3'-dichloro-4,4'-diaminodiphenylmethane (MOCA) and liquid MOCA obtained by modification with formaldehyde, ethylene diamine (EDA), N,N-dihydroxy(diisopropyl) aniline (HPA) and the like, as well as hydroquinone-di(β-hydroxyethyl) ether (HQEE).

It is well known to those skilled in the art that the chain extender commonly used in the field of polyurethanes is a di- or polyhydric alcohol having a low molecular weight, a compound containing an amino or an imino group or an ether alcohol. The present invention preferably includes a polyol/alcohol amine-based chain extender having a low molecular weight including, but not limited to, propylene glycol, dipropylene glycol, butylene glycol, ethylene glycol, diethylene glycol, hexanediol, diethanolamine, triethanolamine, diisopropanolamine, triisopropanolamine, and the like. Preferably, the component B of the polyurethane reaction system of the present invention further comprises at least one alcohol, alcohol amine or diamine-based chain extender having a low molecular weight, which is present in a content of 7 to 15 wt%, preferably 9 to 13 wt%, based on the total weight of the component B.

### Catalyst

Common catalysts for a reaction system of the polyurethane microcellular elastomer can be classified into the following types: 1) (cyclo)aliphatic tertiary amine catalysts such as triethylene diamine (DABCO), pentamethyl-diethylene triamine, dimethylcyclohexylamine (DMCHA) and N,N-dimethylcyclohexylamine; 2) metal compounds such as organotins, dibutyltin laurate (DBTDL), products UL-4, UL-6, UL-22, UL-28 and UL-32 of UL series from Momentive, etc.; 3) hydroxy-containing catalysts, such as dimethylaminopropyl dipropanolamine (DPA), N-methyldiethanolamine (MDEA) and dimethylaminopropylamine (DMAPA)-Amin Z, etc.; 4) ether amine catalysts, for example bis-N,N'-dimethylaminoethylether, N-ethylmorpholine (NEM) and 2,2-dimorpholinodiethyl ether (DMDEE) and the like.

Tertiary amine catalysts useful in the component B include, but are not limited to, triethylamine, tributylamine, dimethylbenzylamine, dicyclohexylmethylamine, dimethylcyclohexylamine, N,N,N',N'-tetramethyldiaminodiethylether, bis(dimethylaminopropyl)urea, N-methylmorpholine or N-ethylmorpholine, N-cyclohexylmorpholine, N,N,N',N'-tetramethylethylenediamine, N,N,N',N'-tetramethylbutanediamine, N,N,N',N'-tetramethylhexane-1,6-diamine, pentamethyldiethylenetriamine, dimethylpiperazine, N-dimethylaminoethylpiperidine, 1,2-dimethylimidazole, 1-azabicyclo-[2.2.0]octane, 1,4-diazabicyclo[2.2.2]octane (Dabco), and alkanolamine compounds such as triethanolamine, triisopropanolamine, N-methyldiethanolamine, and N-ethyldiethanolamine, dimethylaminoethanol, 2-(N,N-dimethylaminoethoxy)ethanol, N,N',N"-tris(dialkylaminoalkyl)hexahydrotriazines, such as N,N',N"-tris(dimethylaminopropyl)-hexahydrotriazine, and triethylenediamine. Metal salts such as ferric chloride, zinc chloride and lead octoate are also suitable. Preferable are tin salts such as tin dioctoate, tin diethylhexanoate and dibutyltin dilaurate, and in particular mixtures of a tertiary amine and an organotin salt.

Preferably, the catalyst of the polyurethane reaction system of the present invention is present in a content of 0.5 to 2.1 wt%, based on the total weight of the component B.

Preferably, the tertiary amine catalyst of the present invention is one, two or more selected from the group consisting of triethylenediamine, N-ethylmorpholine, N,N,N',N'-tetramethylethylenediamine, dimethylaminopropylenediamine, N,N,N',N'-tetramethyldipropylenetriamine or mixtures thereof and also weak acid-modified products of the above tertiary amine catalysts. The tertiary amine catalyst of the present invention is present preferably in a content of 0.5 to 2.0 wt%, based on the total weight of the component B.

Optionally, the catalyst of the present invention includes at least one organotin catalyst. Preferably, the organotin catalyst is one, two or more selected from the group consisting of alkyltin thiolates, alkyltin mercaptoacetates and long-chain-alkyltin carboxylates. The organotin catalyst is present in a content of 0.02 to 0.10 wt%, based on the total weight of the component B.

### Foaming agent

Component B of the polyurethane reaction system of the present invention may further comprise one or more foaming agents. The foaming agent may be selected from the group consisting of fluorine-based hydrocarbon compounds (hydrofluorocarbon compounds) and/or alternatively selected from the group consisting of acetal-based compounds and/or water. A suitable fluorine-based hydrocarbon compound is Forane® 365 (available from Arkema Inc.). The foaming agent used may be a combination of the above compounds and/or water.

Preferably, the foaming agent is water, which is present in a content of 0.2 to 1 wt%, preferably 0.3 to 0.7 wt%, based on the total weight of the component B.

### Colorant/color paste

Colorant/color paste, in general, refers to a semi-finished product obtained by dispersing a pigment or a pigment and a filler in a paint. Preferably, the component B of the polyurethane reaction system of the present invention further comprises a color paste, which is present in a content of 0.1 to 5.0 wt%, based on the total weight of the component B.

The polyurethane reaction system may further comprise conventional additives such as a stabilizer, a filler, a mold release agent, and the like.

The polyurethane microcellular elastomer of the present invention using the trimethylolpropane-started polycaprolactone triol and corresponding components of the polyurethane reaction system has other satisfactory physical properties such as tensile strength and tear strength while having excellent fatigue resistance.

### Non-pneumatic tire

Another aspect of the present invention is to provide a non-pneumatic tire. The non-pneumatic tire comprises a polyurethane microcellular elastomer obtained from a reaction system comprising the following components:
a component A, including isocyanates;
a component B, including:
   B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
   B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B;
   B3) one or more catalysts; and
   B4) one or more foaming agents.

Preferably, the B1) is present in a content of 0.5 to 5 wt%, preferably 1 to 3 wt%, more preferably 1.5 to 2.5 wt%, based on the total weight of the component B.

Preferably, the foaming agent is water, which is present in a content of 0.2 to 1 wt%, preferably 0.3 to 0.7 wt%, based on the total weight of the component B.

Preferably, the component B further comprises B5) at least one alcohol, alcohol amine or diamine-based chain extender having a low molecular weight, which is present in a content of 7 to 15 wt%, preferably 9 to 13 wt%, based on the total weight of the component B.

Preferably, the component B further comprises B6) at least one surfactant, which is present in a content of 0.2 to 1.0 wt%, preferably 0.2 to 0.6 wt%, based on the total weight of the component B.

The non-pneumatic tire prepared from the polyurethane microcellular elastomer of the present invention can pass a rigorous fatigue resistance test, and has a very long service life even when used for non-motor vehicles running at high speed (for example 40 km/h). Moreover, it is not necessary to provide an outer tube, which can improve production efficiency, save resources and save costs.

### Process for producing a non-pneumatic tire

A process for producing a non-pneumatic tire provided by the present invention comprises: injecting said polyurethane reaction system into a mold, reacting, and then releasing the resultant from the mold after the completion of the reaction to obtain the non-pneumatic tire.

The mold for producing the non-pneumatic tire is preferably a mold which can realize centrifugal casting, and various methods can be chosen. For example, in the centrifugal casting mode, the components of the polyurethane reaction system are injected in corresponding proportions into the mold, and the polyurethane system is reacted and foamed into a non-pneumatic tire of polyurethane microcellular elastomer (integrated tire). Preferably, the polyurethane microcellular elastomer can also be cured at room temperature or under heating condition in an oven to obtain the non-pneumatic tire.

The process for producing a non-pneumatic tire of the invention eliminates the need for an outer tube, simplifies the preparation process, improves production efficiency, and saves cost.

### Examples

The present invention will be specifically described below by way of examples.

The test methods used in the present invention are as follows:
Hardness (Asker C): determined according to the method of DIN ISO 7619.
Tensile strength: determined according to the method of DIN ISO 37, method 1.
Elongation at break: determined according to DIN ISO 37, method 1
Tear strength: determined according to the method of DIN ISO 34-1-2004, method 1.

Fatigue resistance test (running durability test) refers to the test method according to JIS K6302-2011 standard with a load of 70 kg, continuous running of 3000 km at 40 km/h. If the tire is intact, it means that it passes the test.

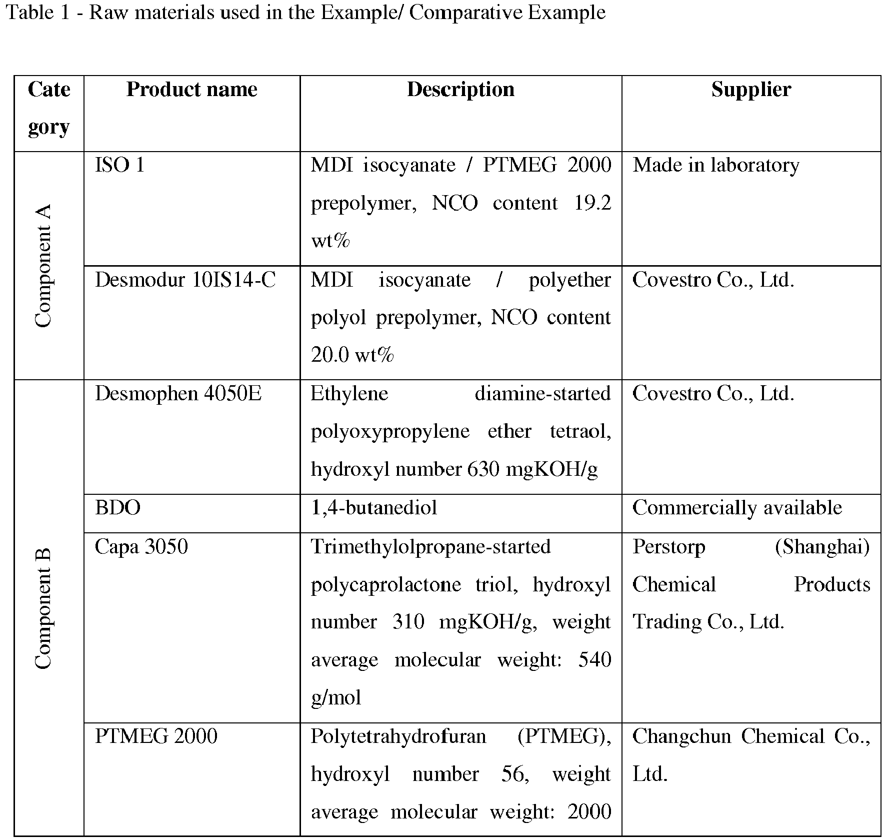

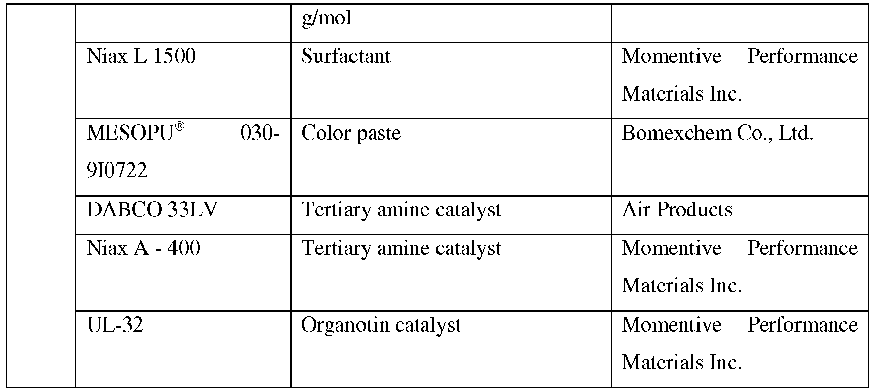

### Preparation of ISO1 in Table 1:

373 g of polytetramethylene ether glycol (PTMEG 2000) was placed in an oven at about 50 ° C, melted into a liquid, and then added to a four-necked flask. 567 g of Desmodur 44C (monomeric MDI) and 60 g of Desmodur CD-C (liquefied MDI) were added. After a reaction at 70 to 80°C for 2 to 3 hours, samples were taken and NCO contents thereof were measured. When the theoretical value (19.2 wt%, based on the total weight of the component A) was reached, the temperature was lowered. A NCO-terminated prepolymer ISO1 was obtained.

**Table 2 - Preparation of polyurethane microcellular elastomers and non-pneumatic tires:**

| Component/content (g) | Comparative Example 1 | Example 1 |
|---|---|---|
| PTMEG 2000 | 85.22 | 84.22 |
| BDO | 12 | 12 |
| 4050E | 1 | 0 |
| Capa 3050 | 0 | 2 |
| 33LV | 0.6 | 0.6 |
| A-400 | 0.2 | 0.2 |
| UL-32 | 0.03 | 0.03 |
| L-1500 | 0.45 | 0.45 |
| Water | 0.5 | 0.5 |
| Total | 100 | 100 |
| ISO 1 | NCO:19.2 | NCO:19.2 |
| | 91 | 91 |
| Packed density (kg/m3) | 400 | 400 |
| Hardness (Asker C) | 70 to 75 | 70 to 75 |
| Tensile strength (MPa) | 3.63 MPa | 3.85 MPa |
| Elongation at break (%) | 283 | 281 |
| Tear strength (KN/m) | 5.57 KN/m | 7.50 KN/m |
| Fatigue resistance test | Not pass | Pass |

### Preparation of non-pneumatic tires:

The prepared mold was preheated. The components of the polyurethane reaction system of the Example and the Comparative Example listed in Table 2 were respectively injected into the mold by centrifugal casting. After the reaction was completed and the polyurethane resin was cured, the resultant was released from the mold to obtain the non-pneumatic tire. For the fatigue resistance test 2 wt.-% of MESOPU® 030-910722, based on the total weight of component B = 100 wt.-%, was additionally added to the polyurethane reaction system of the Example and the Comparative Example listed in Table 2..

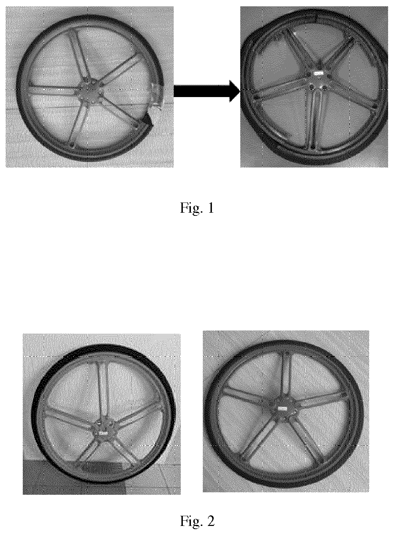

It can be seen from the above experimental test results that the tire produced in Comparative Example 1 was damaged after continuous running of 1373.6 km, and did not pass the fatigue resistance test. As can be seen from Fig. 1, the damage was relatively serious and the tire could not be used any longer. On the contrary, the tire produced in Example 1 was in good condition after continuous running of 3000 km at 40 km/h according to the fatigue resistance test in the present invention, i.e. JIS K6302-2011 standard. The tire passed the test. It can be seen from Fig. 2 that the tire before and after the test showed basically no change and were intact. They could be used further.

While the present invention has been described with its preferable embodiments as above, such embodiments are not intended to limit the present invention. It is obvious to those skilled in the art that various changes and modifications can be made without departing from the spirit and scope of the present invention. The protection scope of the present invention should be determined by the scope of the claims of the present patent application.

## Claims

1. A polyurethane microcellular elastomer obtained from a reaction system comprising the following components:
a component A, one or more polyisocyanates;
a component B, including:
B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B;
B3) one or more catalysts; and
B4) one or more foaming agents.

2. The polyurethane microcellular elastomer according to claim 1, wherein the polyisocyanate is a NCO-terminated isocyanate prepolymer having a NCO content of 15 to 25 wt% (as determined according to GBT 18446-2009).

3. The polyurethane microcellular elastomer according to claim 1, wherein the B1) is present in a content of 0.5 to 5 wt%, preferably 1 to 3 wt%, more preferably 1.5 to 2.5 wt%, based on the total weight of the component B.

4. The polyurethane microcellular elastomer according to any one of claims 1 to 3, wherein the foaming agent is water, which is present in a content of 0.2 to 1 wt%, preferably 0.3 to 0.7 wt%, based on the total weight of the component B.

5. The polyurethane microcellular elastomer according to any one of claims 1 to 3, wherein the component B further comprises B5) at least one alcohol, alcohol amine or diamine-based chain extender having a low molecular weight, which is present in a content of 7 to 15 wt%, preferably 9 to 13 wt%, based on the total weight of the component B.

6. The polyurethane microcellular elastomer according to any one of claims 1 to 3, wherein the component B further comprises B6) at least one surfactant, which is present in a content of 0.2 to 1.0 wt%, preferably 0.2 to 0.6 wt%, based on the total weight of the component B.

7. A non-pneumatic tire comprising a polyurethane microcellular elastomer obtained from a reaction system comprising the following components:
a component A, one or more polyisocyanates;
a component B, including:
B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B;
B3) one or more catalysts; and
B4) one or more foaming agents.

8. The non-pneumatic tire according to claim 7, wherein the B1) is present in a content of 0.5 to 5 wt%, preferably 1 to 3 wt%, more preferably 1.5 to 2.5 wt%, based on the total weight of the component B.

9. The non-pneumatic tire according to claim 7 or 8, wherein the component B further comprises B5) at least one alcohol, alcohol amine or diamine-based chain extender having a low molecular weight, which is present in a content of 7 to 15 wt%, preferably 9 to 13 wt%, based on the total weight of the component B.

10. The non-pneumatic tire according to claim 7 or 8, wherein the component B further comprises B6) at least one surfactant, which is present in a content of 0.2 to 1.0 wt%, preferably 0.2 to 0.6 wt. %, based on the total weight of the component B.

11. A process for producing a non-pneumatic tire, comprising:
injecting a polyurethane reaction system into a mold, reacting, and then releasing the resultant from the mold after the completion of the reaction to obtain the non-pneumatic tire, wherein the polyurethane reaction system comprises the following components:
a component A, one or more polyisocyanates;
a component B, including:
B1) at least one trimethylolpropane-started polycaprolactone triol having a weight average molecular weight of 300 to 1200 g/mol, preferably 400 to 900 g/mol, more preferably 450 to 750 g/mol (as determined according to GB/T 7383-2007);
B2) at least one polytetramethylene ether glycol having a weight average molecular weight of 650 to 2000 g/mol, preferably 1000 to 2000 g/mol (as determined according to GB/T 7383-2007) in a content of 80 to 90 wt%, preferably 82 to 88 wt%, based on the total weight of the component B;
B3) one or more catalysts; and
B4) one or more foaming agents.

12. The process for producing a non-pneumatic tire according to claim 11, wherein the B1) is present in a content of 0.5 to 5 wt%, preferably 1 to 3 wt%, more preferably 1.5 to 2.5 wt%, based on the total weight of the component B.

13. Use of a non-pneumatic tire according to any one of claims 7 to 10 in non-motor vehicles having at least one wheel, which may reach a speed of <50 km/h, preferably 20 km/h to 50 km/h, more preferably 30 km/h to 50 km/h.

14. A non-motor vehicle comprising at least one non-pneumatic tire according to any one of claims 7 to 10.

15. The non-motor vehicle according to claim 14, wherein the non-motor vehicle is a bicycle, preferably an electric bicycle.

16. The non-motor vehicle according to claim 14 or 15, wherein said at least one non-pneumatic tire refers to two non-pneumatic tires.
